# EUROPEAN PATENT SPECIFICATION

(11) **EP 4 603 897 B1**
(45) Date of publication and mention of the grant of the patent: **23.09.2026**
(21) Application number: 25152434.4
(22) Date of filing: 17.01.2025
(51) Int. Cl.: G02F 1/133, G02F 1/1333

(54) **DISPLAY DEVICE AND IMAGE SENSING METHOD THEREOF**
ANZEIGEVORRICHTUNG UND BILDERFASSUNGSVERFAHREN DAFÜR
DISPOSITIF D'AFFICHAGE ET PROCÉDÉ DE DÉTECTION D'IMAGE ASSOCIÉ

(30) Priority: 14.02.2024 US 202463553574 P; 22.08.2024 CN 202411160547
(43) Date of publication of application: 20.08.2025
(73) Proprietor: Carux Technology Pte. Ltd., Singapore 339510 (SG)
(72) Inventor: SU, Ching-Tsung, Tainan 74147 (TW); HU, Che-Chang, Tainan 74147 (TW); SU, Pao-Chuan, Tainan 74147 (TW); CHEN, Ting-Sheng, Tainan 74147 (TW)
(74) Representative: Becker, Eberhard

(56) References cited:
- US-A1- 2020 301 188
- US-A1- 2021 405 448
- US-B1- 11 892 721

## Description

### BACKGROUND

### Technical Field

The disclosure relates to an electronic device and a sensing method thereof, and in particular to a display device and an image sensing method thereof.

### Description of Related Art

In current display devices, sensors (such as digital camera systems) are mostly disposed in the peripheral region to sense images. However, the size limitations of the sensors make it challenging to design narrow bezels for display devices.

US 11892721 B1 relates to an electronic privacy shutter for liquid crystal display device. US 2020/301188 A1 relates to a display device including an array substrate, a pixel, a dimming element and a counter substrate. US 2021/405448 A1 relates to a display device including a backlight module and a display module disposed on the backlight module.

### SUMMARY

The invention is set out in the appended set of claims. The following disclosure serves a better understanding of the present invention. The disclosure provides a display device and a sensing method thereof, facilitating improvement in the feasibility of narrow bezel design.

According to the invention, a display device has a display region. The display device includes a display panel and a sensor. The display panel includes a liquid crystal layer, a first electrode, and a second electrode. The liquid crystal layer is disposed corresponding to the display region, and includes a first liquid crystal region and a second liquid crystal region adjacent to the first liquid crystal region. The first electrode is used to control the first liquid crystal region. The second electrode is used to control the second liquid crystal region. The second electrode is electrically independent of the first electrode. The sensor is used to sense image information, and is disposed corresponding to the first liquid crystal region.

According to an embodiment of the disclosure, a display device has a display mode and a non-display mode, and the display device includes a display panel and a sensor. The display panel includes a liquid crystal layer. The liquid crystal layer includes a first liquid crystal region corresponding to the sensor and a second liquid crystal region adjacent to the first liquid crystal region. An image sensing method of a display device includes the following steps. A first voltage is provided to the first liquid crystal region so that the first liquid crystal region is in a light-transmitting state. In the non-display mode, a second voltage is provided to the second liquid crystal region so that the second liquid crystal region is in a non-light-transmitting state. In the display mode, a third voltage is provided to the second liquid crystal region so that the second liquid crystal region is in a light-transmitting state. The first voltage is different from the second voltage, and the second voltage is different from the third voltage.

To make the features and advantages of the disclosure more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a top-view schematic diagram of a display device according to some embodiments of the disclosure.
FIG. 2 is a cross-sectional schematic diagram corresponding to a section line I-I' in FIG. 1.
FIGs. 3 to 5 are partial cross-sectional schematic diagrams of three display devices respectively according to some embodiments of the disclosure. The content related to FIG. 4 and FIG. 5 is not covered by the appended claims and not being part of the invention, and the related content of FIG. 4 and FIG. 5 is considered to be useful for better understanding the invention.

### DESCRIPTION OF THE EMBODIMENTS

Reference will now be made in detail to the exemplary embodiments of the present invention, examples of which are illustrated in the accompanying drawings. Wherever possible, the same reference numbers are used in the drawings and the description to refer to the same or like parts.

Throughout the disclosure and the appended claims, certain terms may be used to refer to specific elements. Those skilled in the art should understand that electronic device manufacturers may refer to a same element by different names. This specification does not intend to distinguish between elements that have the same function but different names. In the following description and claims, terms such as "including", "containing" and "having" are openended words, so that they should be interpreted as meaning "including but not limited to...".

Directional terms mentioned in the specification, such as "up", "down", "front", "rear", "left", "right", etc., only refer to directions of the drawings. Therefore, the used directional terms are illustrative, not limiting, of the disclosure. In the drawings, various figures illustrate general characteristics of methods, structures and/or materials used in particular embodiments. However, these drawings should not be construed to define or limit the scope or nature encompassed by these embodiments. For example, the relative sizes, thicknesses and positions of various film layers, regions and/or structures may be reduced or exaggerated for clarity's sake.

One structure (or layer, element, substrate) described in the disclosure is located on/above another structure (or layer, element, substrate), which means that the two structures are adjacent and in direct connection, or means that the two structures are adjacent but in indirect connection. Indirect connection means that there is at least one intermediate structure (or intermediate layer, intermediate element, intermediate substrate, intermediate space) between the two structures, a lower surface of a structure is adjacent or directly connected to an upper surface of the intermediate structure, and an upper surface of the other structure is adjacent to or directly connected to a lower surface of the intermediate structure. The intermediary structure may be composed of a single-layer or multi-layer physical structure or non-physical structure, which is not limited by the disclosure. In the disclosure, when a certain structure is described to be "on" another structure, it means that the certain structure is "directly" on the another structure, or means that the certain structure is "indirectly" on the another structure, i.e., at least one structure is further clamped between the certain structure and the another structure.

The terms "about", "substantially" or "approximately" are generally interpreted as within 10% of a given value or range, or as within 5%, 3%, 2%, 1% or 0.5% of the given value or range. In addition, the terms "the range is from a first value to a second value", "the range falls between a first value to a second value" mean that the range includes the first value, the second value, and other values there between.

The ordinal numbers used in the specification and claims, such as "first", "second", etc., are used to modify elements, and do not imply and represent that the element or these elements have any previous ordinal numbers, and do not represent a sequence of one element with another, or a sequence in a manufacturing method. The use of these ordinal numbers is only to make a clear distinction between one element with a certain name and another element with the same name. The same terms may not be used in the claims and the specification, and accordingly, a first element in the specification may be a second element in the claims.

The electrical connection or coupling described in this disclosure may refer to direct connection or indirect connection. In the case of direct connection, terminals of elements on two circuits are directly connected or connected to each other by a conductor line segment, and in the case of indirect connection, there are switches, diodes, capacitors, inductors, resistors, other suitable elements, or a combination of the above elements between the terminals of the elements on the two circuits, but the disclosure is not limited thereto.

In the disclosure, the thickness, length, and width may be measured by using an optical microscope (OM), and the thickness or width may be measured by a cross-sectional image in an electron microscope, but the disclosure is not limited thereto. In addition, there may be a certain error in any two values or directions used for comparison. In addition, the expressions "the given range is a first value to a second value", "the given range falls within a range of the first value to the second value", or "the given range falls between the first value to the second value" mean that the given range includes the first value, the second value, and other values there between. If a first direction is perpendicular to a second direction, an angle between the first direction and the second direction may be between 80 degrees and 100 degrees; and if the first direction is parallel to the second direction, the angle between the first direction and the second direction may be between 0 degree and 10 degrees.

Unless otherwise defined, all terms (including technical and scientific terms) used herein have the same meanings as commonly understood by those skilled in the art to which this disclosure belongs. It is understandable that these terms, such as those defined in commonly used dictionaries, should be interpreted as having meaning consistent with the relevant technology and the background or context of this disclosure, and should not be interpreted in an idealized or excessively formal way, unless there is a special definition in the embodiment of the disclosure.

In the disclosure, the electronic device may include a display device, a backlight device, an antenna device, a package device, a sensing device, or a splicing device, but the disclosure is not limited thereto. The electronic device may be a bendable or flexible electronic device. The display device may be a non-self-luminous display device or a self-luminous display device. The electronic device may include, for example, liquid crystal, LED, fluorescence, phosphor, quantum dot (QD), other suitable display media, or a combination of the above. The antenna device may include a reconfigurable intelligent surface (RIS), a frequency selective surface (FSS), an RF-filter, a polarizer, a resonator, or an antenna. The antenna may be a liquid-crystal antenna or an antenna using varactor diodes. The sensing device may be a sensing device for sensing capacitance, light, heat, or ultrasonic waves, but the disclosure is not limited thereto. In the disclosure, the electronic device may include an electronic element, and the electronic element may include a passive element and an active element such as a capacitor, a resistor, an inductor, a diode, or a transistor. The diode may include an LED, a varactor diode, or a photodiode. The LED may include, for example, an organic light-emitting diode (OLED), a mini LED, a micro LED, or a quantum dot LED, but the disclosure is not limited thereto. The splicing device may be, for example, a display splicing device or an antenna splicing device, but the disclosure is not limited thereto. It should be noted that the electronic device may be any arrangement and combination of the above, but the disclosure is not limited thereto. The packaging device may be a packaging device suitable for wafer-level package (WLP) technology or panel-level package (PLP) technology, such as a chip-first process or an RDL-first process. In addition, the shape of the electronic device may be rectangular, circular, polygonal, a shape having curved edges, or other suitable shapes. The electronic device may have a peripheral system such as a drive system, a control system, or a light source system to support a display device, an antenna device, a wearable device (e.g., including augmented reality or virtual reality), an in-vehicle device (e.g., including a car windshield), or a splicing device.

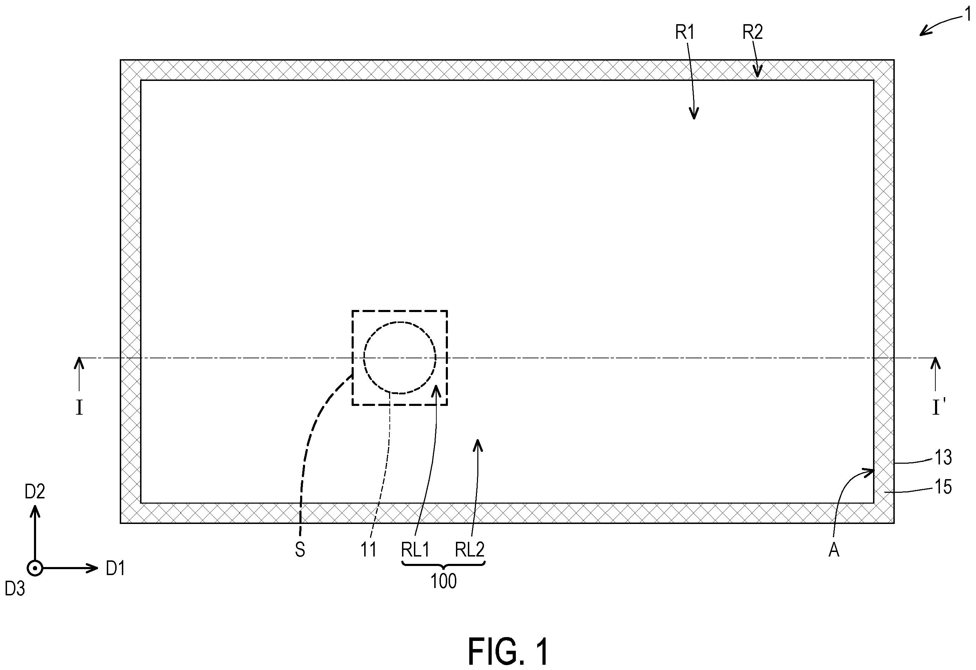

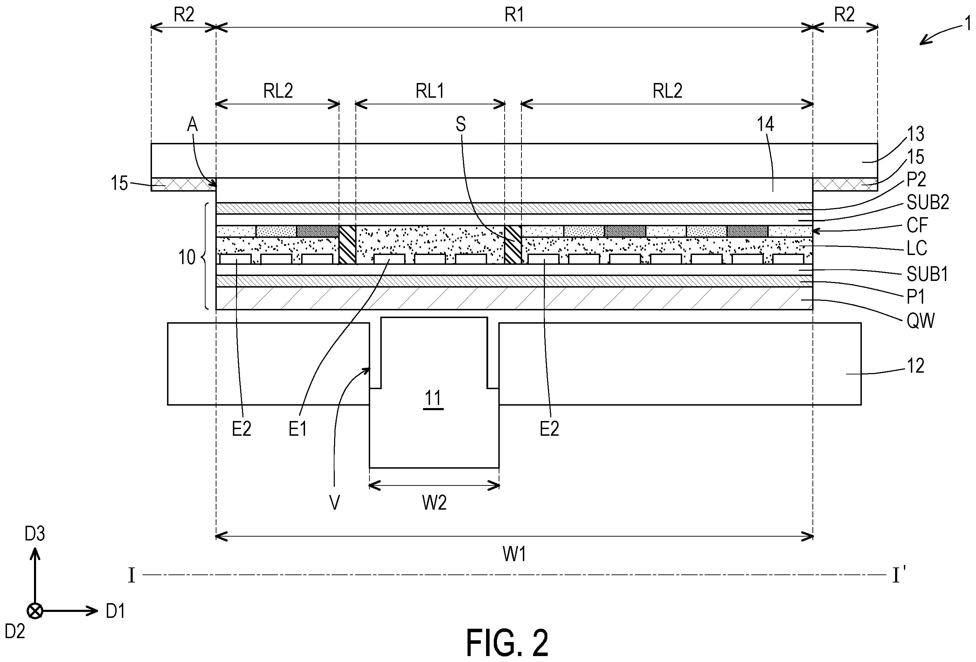

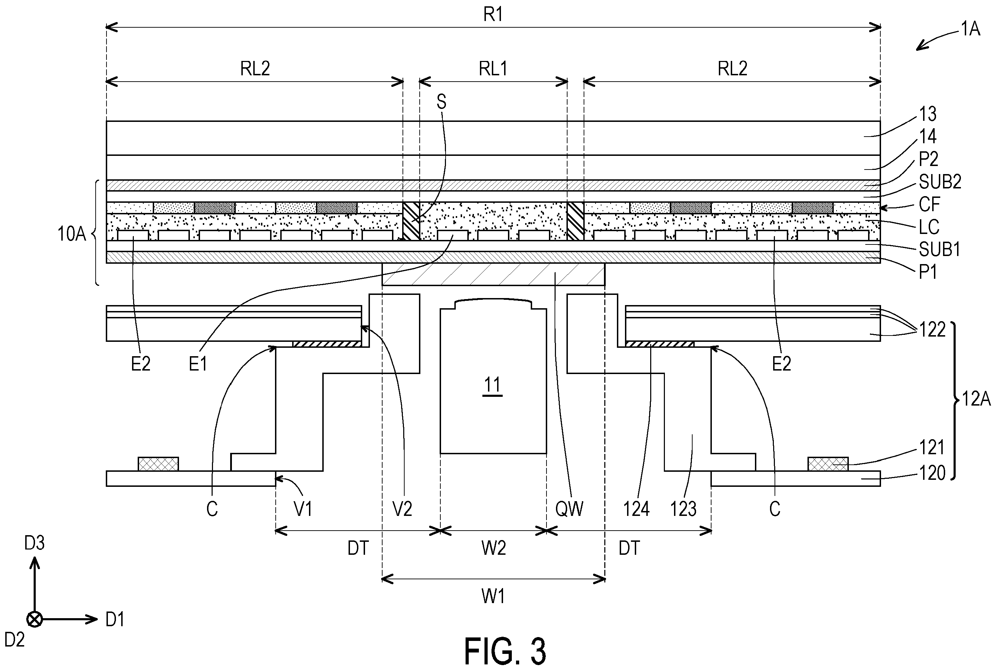

FIG. 1 is a top-view schematic diagram of a display device according to some embodiments of the disclosure. FIG. 2 is a cross-sectional schematic diagram corresponding to a section line I-I' in FIG. 1. FIGs. 3 to 5 are partial cross-sectional schematic diagrams of three display devices respectively according to some embodiments of the disclosure. It is noted that in the following embodiments, features from different embodiments may be replaced, rearranged, or combined to form other embodiments without departing from the scope of the appended set of claims. Features from each embodiment may be freely combined or matched as long as they do not conflict with the claims.

Referring to FIGs. 1 and 2, a display device 1 may have a display region R1. The display device 1 includes a display panel 10 and a sensor 11. The display panel 10 includes a liquid crystal layer LC, a first electrode E1, and a second electrode E2. The liquid crystal layer LC is disposed corresponding to the display region R1 and includes a first liquid crystal region RL1 and a second liquid crystal region RL2 adjacent to the first liquid crystal region RL1. The first electrode E1 is used to control the first liquid crystal region RL1. The second electrode E2 is used to control the second liquid crystal region RL2, and the second electrode E2 is electrically independent of the first electrode E1. The sensor 11 is used to sense image information and is positioned corresponding to the first liquid crystal region RL1.

Specifically, the display region R1 may be used to display image information, such as text or images. In some embodiments, as shown in FIG. 1, the display device 1 may also have a peripheral region R2 (e.g., the grid region in FIG. 1). The peripheral region R2 is located on at least one side of the display region R1 and may be used to dispose peripheral circuits (not shown), circuit boards (not shown), flexible circuit boards (not shown), driving elements (not shown), other elements (not shown), or combinations thereof. In some embodiments, as shown in FIG. 1, the peripheral region R2 may surround the display region R1, but is not limited thereto. Alternatively, the display device 1 may not have a peripheral region R2, and the peripheral circuits, circuit boards, flexible circuit boards, driving elements, etc. may overlap the display region R1 in the thickness direction (e.g., a direction D3) of the display device, for example, by being disposed on a side of a backboard (not shown) away from the display panel 10, but this is not a limitation.

The display panel 10 may be used to provide image information. The display panel 10 may be a non-self-luminous display panel, such as a liquid crystal display panel. As shown in FIG. 2, in addition to the liquid crystal layer LC, the first electrode E1, and the second electrode E2, the display panel 10 also includes a first substrate SUB1, a second substrate SUB2, a spacer S, a dimming layer CF, a first polarizer P1, a second polarizer P2, and a quarter-wave plate QW.

The first substrate SUB1 may be a rigid substrate or a flexible substrate. The material of the first substrate SUB1 may include glass, quartz, ceramic, sapphire, or plastic, but is not limited thereto. The plastic may include polycarbonate (PC), polyimide (PI), polypropylene (PP), polyethylene terephthalate (PET), other suitable flexible materials, or combinations thereof, but is not limited thereto.

The second substrate SUB2 is disposed relative to the first substrate SUB1. For example, the second substrate SUB2 at least partially overlaps the first substrate SUB1 in the direction D3. The second substrate SUB2 may also be a rigid substrate or a flexible substrate. References may be made to the material of the first substrate SUB1 for the material of the second substrate SUB2, which will not be repeated here.

The liquid crystal layer LC is disposed between the first substrate SUB1 and the second substrate SUB2. The type of the liquid crystal layer LC may not be limited. For example, the liquid crystal layer LC may include twisted nematic liquid crystal, vertical alignment liquid crystal, or in-plane switching liquid crystal, but is not limited thereto.

The spacer S is disposed between the first substrate SUB1 and the second substrate SUB2 and separates the first liquid crystal region RL1 from the second liquid crystal region RL2. For example, as shown in FIGs. 1 and 2, the top view shape of the spacer S may be a closed shape, wherein the region inside the spacer S is the first liquid crystal region RL1, and the region outside the spacer S is the second liquid crystal region RL2. The closed shape may be rectangular, circular, or other polygons, which may not be limited here. The spacer S may be disposed in a way that causes the first liquid crystal region RL1 to at least overlap the sensor 11 in the direction D3.

In some embodiments, the spacer S may be made with opaque materials to reduce light interference between the first liquid crystal region RL1 and the second liquid crystal region RL2. Alternatively, the spacer S may be made with a light-transmitting material, and a light-shielding layer (not shown, e.g., a light-absorbing layer or a reflective layer) may be formed on a sidewall of the spacer S to reduce light interference between the first liquid crystal region RL1 and the second liquid crystal region RL2 and/or improve light utilization.

The first electrode E1 and the second electrode E2 are disposed between the first substrate SUB1 and the liquid crystal layer LC, wherein the first electrode E1 is disposed in the first liquid crystal region RL1, and the second electrode E2 is disposed in the second liquid crystal region RL2. The first electrode E1 and the second electrode E2 may be in the same electrode layer, e.g., both being pixel electrodes, and the material of the first electrode E1 and the second electrode E2 may be a transparent conductive material. The transparent conductive material may include metal oxides, graphene, other suitable transparent conductive materials, or combinations thereof. The metal oxide may include indium tin oxide, indium zinc oxide, aluminum tin oxide, aluminum zinc oxide, indium germanium zinc oxide, or other metal oxides.

According to different needs, although not shown, the display panel 10 may also include a common electrode, wherein the common electrode and the pixel electrode may be respectively disposed on opposite sides of the liquid crystal layer LC. The common electrode may be disposed between the pixel electrode and the first substrate SUB1. Alternatively, the common electrode may be disposed in the same layer as the pixel electrode. By adjusting the voltage difference between the pixel electrode and the common electrode, the tilt state of the liquid crystal molecules in the liquid crystal layer LC may be altered, thereby controlling the light-transmitting state (or grayscale) of the display region R1. Alternatively, the common electrode may be applied with a constant voltage. By changing the voltage applied to the pixel electrode, the tilt state of the liquid crystal molecules in the liquid crystal layer LC may be changed, thereby controlling the light-transmitting state of the display region R1. This may be applied to the following embodiments with changes and will not be repeated.

For example, the tilt state of the liquid crystal molecules in the first liquid crystal region RL1 may be changed by changing the voltage applied to the first electrode E1 in the first liquid crystal region RL1, thereby switching the first liquid crystal region RL1 between a light-transmitting state (e.g., a bright state) and a non-light-transmitting state (e.g., a dark state). On the other hand, the tilt state of the liquid crystal molecules in individual pixel regions (corresponding to individual second electrodes E2) may be changed by changing the voltage applied to individual second electrodes E2, thereby switching the pixel regions between the light-transmitting state and the non-light-transmitting state. In some embodiments, the voltage signals for the first electrode E1 and the second electrode E2 may come from the same voltage source or the same chip (IC). Through preprocessing or chip algorithm processing, the same voltage source or the same chip may apply voltage signals that control the tilt state of liquid crystal molecules in different liquid crystal regions to different electrodes. In some other embodiments, the voltage signals for the first electrode E1 and the second electrode E2 may come from different voltage sources or different chips, and voltage signals controlling the tilt state of liquid crystal molecules in different liquid crystal regions may be applied to different electrodes through the different voltage sources or different chips. This may be applied to the following embodiments with changes and will not be repeated.

The number of the first electrodes E1 may be one or more, and may not be limited here. If there are multiple first electrodes E1 in the first liquid crystal region RL1, when switching the state (e.g., the bright state or the dark state) of the first liquid crystal region RL1, the same voltage may be applied to multiple first electrodes E1 at the same time, making the entire first liquid crystal region RL1 display a single state (e.g., entirely bright or entirely dark). FIG. 2 schematically shows three first electrodes E1, but the disclosure is not limited thereto. The number of second electrodes E2 may be multiple to enable pixelated design (independent grayscale adjustment for individual pixel regions).

The dimming layer CF is disposed between the liquid crystal layer LC and the second substrate SUB2, overlapping the second liquid crystal region RL2. The dimming layer CF includes a color filter layer, a color conversion layer, or a combination thereof. The dimming layer CF is disposed between the second substrate SUB2 and the liquid crystal layer LC. By disposing the dimming layer CF corresponding to the second liquid crystal region RL2 (for example, the dimming layer CF does not overlap the first liquid crystal region RL1 in the direction D3), interference from the dimming layer CF on the first liquid crystal region RL1 (e.g., light absorption, refraction, and/or reflection) can be reduced, thereby improving image clarity or accuracy. However, the disclosure is not limited thereto. In other embodiments, although not shown, the dimming layer CF may overlap both the first liquid crystal region RL1 and the second liquid crystal region RL2 in the direction D3 to improve process and/or assembly convenience.

A first polarizer P1 is disposed between the sensor 11 and the first substrate SUB1. A second polarizer P2 is disposed on the second substrate SUB2. The first polarizer P1 and the second polarizer P2 overlap the display region R1. Polarizers (such as the first polarizer P1 and the second polarizer P2) refer to structures that allow light of a specific polarization direction to pass through while absorbing or reflecting light of other polarization directions. For example, the material of the polarizer may include an organic material, an inorganic material, or a combination thereof.

The absorption axis of the first polarizer P1 is perpendicular to the absorption axis of the second polarizer P2. For example, the absorption axis of the first polarizer P1 may be parallel to a direction D2, and the absorption axis of the second polarizer P2 may be parallel to a direction D1, but this is not a limitation.

In the structure where the absorption axis of the first polarizer P1 is perpendicular to that of the second polarizer P2, the liquid crystal region (such as the first liquid crystal region RL1 and/or the second liquid crystal region RL2) is in a light-transmitting state when a voltage V1 is applied to the pixel electrode (such as the first electrode E1 and/or the second electrode E2), and in a non-light-transmitting state (such as a black screen or a dark state) when a voltage V2 is applied. If twisted nematic liquid crystals are adopted for the liquid crystal layer LC, then V1<V2, and V1 may be 0. If vertically aligned liquid crystals or in-plane switching liquid crystals, then V1>V2, and V1 is, for example, greater than 0.

The quarter-wave plate QW is disposed between the first polarizer P1 and the sensor 11 and at least partially overlaps the first liquid crystal region RL1. The quarter-wave plate QW may convert linearly polarized light into circularly polarized light, or convert circularly polarized light into linearly polarized light. Ambient light incident on the sensor 11 is first be converted into linearly polarized light by the polarizer, and then be converted into circularly polarized light by the quarter-wave plate QW. As a result, the sensor 11 receives ambient light and generate image information. After being reflected by the sensor 11, the circularly polarized light reverses its rotation direction (e.g., from right-handed to left-handed or from left-handed to right-handed) and be blocked (e.g., absorbed) by the polarizer (e.g., the first polarizer P1). By disposing the quarter-wave plate QW and the polarizer, the probability of reflection from the sensor 11 passing through the display panel 10 and being visible to the human eye is reduced, thereby concealing the sensor 11 or reducing the visibility of the sensor 11.

In some embodiments, based on alignment, concealment of the sensor 11 and other considerations, the quarter-wave plate QW has a first width W1 in a first direction (such as the direction D1), and the sensor 11 has a second width W2 (such as the maximum width of the sensor 11 in direction D1), wherein the first width W1 is greater than the second width W2.

In some embodiments, as shown in FIG. 2, the quarter-wave plate QW may further overlap the second liquid crystal region RL2. By disposing a full-surface quarter-wave plate QW (for example, the quarter-wave plate QW overlapping both the first liquid crystal region RL1 and the second liquid crystal region RL2), visual consistency and/or process convenience can be improved.

According to different needs, one or more elements or film layers may be added to or removed from the display panel 10. For example, although not shown in FIG. 1 or FIG. 2, the display panel 10 may also include multiple switching elements. The switching elements may be disposed on the first substrate SUB1 and electrically connected to the pixel electrodes (such as the first electrode E1 or the second electrode E2). In some embodiments, elements (such as the dimming layer CF or an unshown black matrix) that might affect light transmission may be disposed outside the first liquid crystal region RL1 to reduce interference (such as light absorption, refraction, and/or reflection) from elements affecting light transmission to the first liquid crystal region RL1, thereby improving the clarity or accuracy of image sensing. Alternatively, the switching elements and/or the dimming layer CF in the first liquid crystal region RL1 may not be removed (for example, the first liquid crystal region RL1 and the second liquid crystal region RL2 of the display panel 10 may have the same or similar configuration), and/or the fabrication of the spacer S may be omitted so as to improve process and/or assembly convenience. In some embodiments, although not shown, the quarter-wave plate QW may be replaced with other phase delay elements, such as a half-wave plate or other suitable optical layers. This may be applied to the following embodiments with changes and will not be repeated.

The sensor 11 may be an optical sensor and may include an infrared camera, a visible light camera, cameras for other wavelengths, or a combination thereof, but is not limited thereto. According to different needs, the number of the sensor 11 may be one or more, and correspondingly, the number of the spacer S may be one or more. The spacers S may be respectively disposed corresponding to the sensors 11. For example, in the top-view diagram, the spacers S may respectively surround one or more sensors 11. In FIG. 1, there is one sensor 11 and one spacer S, and both the sensor 11 and the spacer S are disposed in the lower left of the display region R1. However, it should be understood that the number and relative disposition of the sensor 11 and the spacer S may be changed according to the needs and are not limited to those shown in FIG. 1. This may be applied to the following embodiments with changes and will not be repeated.

The display device 1 may have a display mode (e.g., displaying an image) and a non-display mode (e.g., displaying a black image), and when the display device 1 is in any one of the display mode and the non-display mode, the first liquid crystal region RL1 may be in a light-transmitting state according to the first voltage. Specifically, when the sensor 11 is operating (e.g., capturing an image), regardless of whether the display device 1 is in the display mode or the non-display mode, the first voltage may be applied to the first electrode E1 in the first liquid crystal region RL1, so that the first liquid crystal region RL1 is in the light-transmitting state, thereby allowing the sensor 11 to capture external images. Alternatively, the quarter-wave plate QW is disposed between the first polarizer P1 and the sensor 11 and at least partially overlaps the first liquid crystal region RL1 to conceal the sensor 11 or reduce the visibility of the sensor 11. As previously mentioned, if twisted nematic liquid crystals are adopted for the liquid crystal layer LC, the first voltage (such as the voltage V1) may be 0. If the vertically aligned liquid crystals or in-plane switching liquid crystals are adopted for the liquid crystal layer LC, the first voltage (such as the voltage V1) may be greater than 0. This may be applied to the following embodiments with changes and will not be repeated.

In some embodiments, an image sensing method of the display device 1 may include the following steps. The first voltage (such as the voltage V1) is provided to the first liquid crystal region RL1 so that the first liquid crystal region RL1 is in the light-transmitting state. In the non-display mode, a second voltage is provided to the second liquid crystal region RL2 so that the second liquid crystal region RL2 is in the non-light-transmitting state (e.g., displaying a black image). In the display mode, a third voltage is provided to the second liquid crystal region RL2 so that the second liquid crystal region RL2 is in the light-transmitting state. The first voltage is different from the second voltage, and the second voltage is different from the third voltage. In the structure where the same type of liquid crystal is used in both the first liquid crystal region RL1 and the second liquid crystal region RL2, the first voltage and the third voltage may be the same, but this is not a limitation. References may be made to the descriptions above for the image sensing method for the display device in any embodiment of the disclosure, and the descriptions will not be repeated below.

In some embodiments, as shown in FIG. 1 or FIG. 2, in addition to the display panel 10 and the sensor 11, the display device 1 may further include a backlight module 12, a cover plate 13, a bonding layer 14, and a decorative layer 15. The backlight module 12 may include a through via V for accommodating the sensor 11. The cover plate 13 may be disposed above the display panel 10 through the bonding layer 14. The cover plate 13 may also be used to protect the elements or film layers thereunder. The cover plate 13 may be a rigid substrate or a flexible substrate. The material of the cover plate 13 may include glass, quartz, ceramic, sapphire, plastic, or a combination thereof, but is not limited thereto. The plastic may include polycarbonate (PC), polyimide (PI), polypropylene (PP), polyethylene terephthalate (PET), other suitable flexible materials, or combinations thereof, but is not limited thereto. The bonding layer 14 may include a transparent adhesive layer, such as optical clear adhesive (OCA) or optical clear resin (OCR), but is not limited thereto.

The decorative layer 15 is disposed on the surface of the cover plate 13 facing the display panel 10 and is located in the peripheral region R2 to cover elements in the display device 1 that are not intended to be visible to the user (such as the peripheral circuits, circuit boards, flexible circuit boards, or driving elements). The material of the decorative layer 15 may include an opaque organic polymer material, such as a gray or black organic polymer material (e.g., a black matrix), but is not limited thereto. The decorative layer 15 may have an opening A exposing the display region R1 so that the user sees the image information displayed in the display region R1.

In this embodiment, by disposing the sensor 11 in an overlapping manner with the display region R1, the feasibility of narrow bezel design may be enhanced, realizing a narrow or even bezel-less design for the display device 1. Additionally, by independently controlling the first electrode E1 in the first liquid crystal region RL1 corresponding to the sensor 11, the first liquid crystal region RL1 may be in the light-transmitting state, allowing the sensor 11 to capture external images. Optionally, through the combination of the polarizer and the quarter-wave plate QW, the light reflected by the sensor 11 may be blocked (e.g., absorbed), thereby concealing the sensor 11 or reducing the visibility of the sensor 11. Optionally, by disposing an opaque spacer S or forming a light-blocking layer (such as a light-absorbing layer or a reflective layer) on a transparent spacer S, light interference between the first liquid crystal region RL1 and the second liquid crystal region RL2 may be reduced, and/or light utilization may be improved.

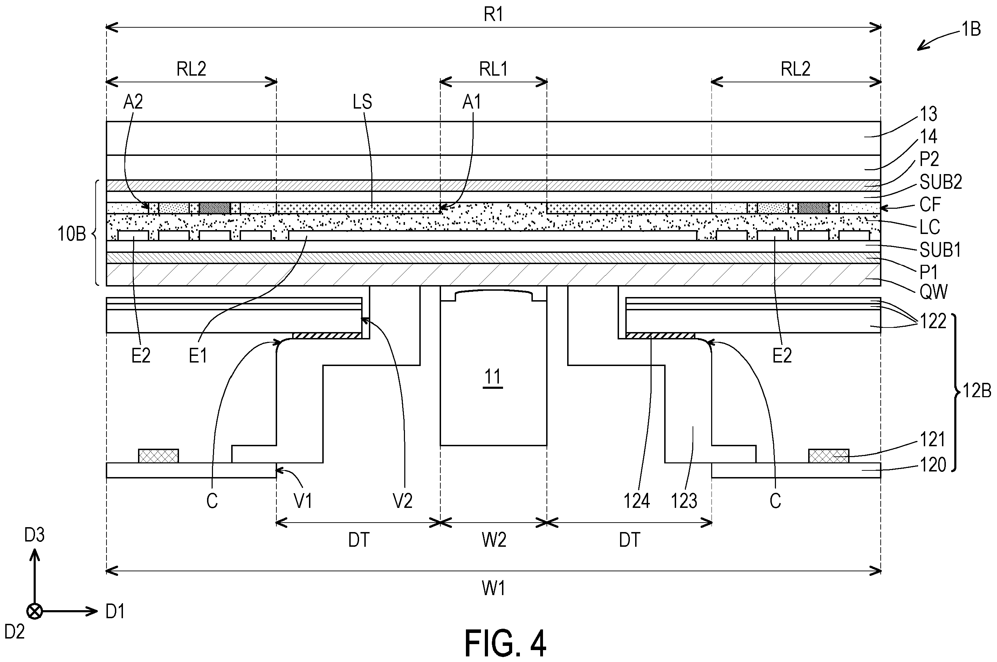

In other embodiments, although not shown, the display panel 10 may be replaced with a display panel 10A in FIG. 3 or a display panel 10B in FIG. 4.

Referring to FIG. 3, the main differences between a display device 1A and the display device 1 in FIG. 2 are described as follows. In the display device 1A, a backlight module 12A includes a substrate 120, multiple light-emitting units 121, and at least one optical film 122.

The substrate 120 is, for example, a circuit board, such as a printed circuit board assembly (PCBA), but is not limited thereto. The substrate 120 has a first through via V1 (a region where the substrate 120 is hollowed out), and the first through via V1 overlaps the sensor 11.

The light-emitting units 121 are disposed on the substrate 120 and electrically connected to the substrate 120. In some embodiments, the light-emitting units 121 may overlap the second liquid crystal region RL2 and overlap both the first polarizer P1 and the second polarizer P2. The light-emitting units 121 may be multiple light-emitting diodes, such as multiple organic light-emitting diodes (OLEDs), mini light-emitting diodes, micro light-emitting diodes, or quantum dot light-emitting diodes, but are not limited thereto. The emission wavelength of the light-emitting unit 121 may range from 300 nm to 10000 nm, but is not limited thereto. In some embodiments, the light-emitting units 121 may have different emission wavelengths, such as the red light wavelength, green light wavelength, blue light wavelength, and infrared wavelength, but are not limited thereto. In some other embodiments, the light-emitting units 121 may all have the same emission wavelength. This may be applied to the following embodiments with changes and will not be repeated.

At least one optical film 122 is disposed between the light-emitting units 121 and the first polarizer P1, and the optical film 122 has a second through via V2 (i.e., a region where the optical film 122 is hollowed out). The second through via V2 overlaps the sensor 11. Specifically, the second through via V2 is disposed corresponding to the first liquid crystal region RL1. The optical film 122 may include a diffuser, a brightness enhancement film (BEF), a dual brightness enhancement film (DBEF), or a combination thereof. FIG. 3 schematically shows three optical films 122, but it should be understood that the number of the optical films 122 may be changed according to the needs. This may be applied to the following embodiments with changes and will not be repeated.

In some embodiments, as shown in FIG. 3, the backlight module 12A may also include a supporting element 123 and a bonding layer 124. The supporting element 123 may be used to support at least one optical film 122 and/or maintain the distance between the optical film 122 and the light-emitting units 121. In some embodiments, as shown in FIG. 3, the optical film 122 may be fixed on a portion of the supporting element 123 through the bonding layer 124.

The material of the supporting element 123 may include plastic, metal, and/or other suitable materials. In some embodiments, the supporting element 123 may be made with a high-reflective material or covered with a high-reflective material (e.g., being covered on a side away from the sensor 11, or covered on a side adjacent to the light-emitting unit 121 and the optical film 122). This way, when the display device 1A is in display mode, the supporting element 123 helps ensure that the regions in the second liquid crystal region RL2 not corresponding to the light-emitting units 121 (e.g., regions in the second liquid crystal region RL2 adjacent to the side of the supporting element 123 and near the light-emitting unit 121) have consistent brightness or consistent display quality with other regions in the second liquid crystal region RL2 corresponding to the light-emitting units 121, reducing the chances of brightness unevenness or poor display quality in the second liquid crystal region RL2. In some embodiments, the supporting element 123 may abut the surface of the display panel 10A facing the backlight module 12A. In some embodiments, a buffer layer (not shown) may be disposed between the supporting element 123 and the sensor 11 to protect the sensor 11 or reduce damage to the sensor 11. For example, the buffer layer may include rubber, foam, a sleeve, a bonding layer, and/or other suitable elements. In some embodiments, a distance DT between the inner wall of the first through via V1 and the sensor 11 may be greater than 0 and less than or equal to 15 mm, i.e., 0<DT≤15 mm. In some embodiments, an edge corner C of the supporting element 123 adjacent to the bonding layer 124 and protruding toward the optical film 122 may be an arc edge so as to reduce the chance of the optical film 122 being scratched by the edge corner C due to vibration or other external forces. This may be applied to the following embodiments with changes and will not be repeated.

In addition, in the display panel 10A, the quarter-wave plate QW is disposed corresponding just to the sensor 11 and covers just a portion of the first polarizer P1. In some embodiments, the width W1 of the quarter-wave plate QW in the direction D1 may be greater than or equal to the width W2 of the sensor 11 in the direction D1. With the design of having the quarter-wave plate QW at least cover the sensor 11, concealment of the visibility of the sensor 11 is facilitated. However, in some embodiments, the width W1 of the quarter-wave plate QW in the direction D1 may be less than (2*DT+W2), wherein (2*DT+W2), for example, equals the width of the first through via V1 in the direction D1. However, the disclosure is not limited thereto. Although not shown, the quarter-wave plate QW may fully cover the first polarizer P1.

In other embodiments, although not shown, the display panel 10 may be replaced with the display panel 10 in FIG. 2 or the display panel 10B in FIG. 4.

Referring to FIG. 4, the main differences between a display device 1B and the display device 1A in FIG. 3 are described as follows. In the display device 1B, the supporting element 123 abuts the surface of the display panel 10B facing a backlight module 12B. Additionally, the supporting element 123 is adjacent to the bonding layer 124, and the edge corner C that protrudes toward the optical film 122 is an arc edge. A buffer layer (not shown) may be disposed between the supporting element 123 and the sensor 11 to protect the sensor 11 or reduce damage to the sensor 11.

In addition, in the display panel 10B, for example, the quarter-wave plate QW fully covers the first polarizer P1, but the disclosure is not limited thereto. Although not shown, the quarter-wave plate QW may cover just a portion of the first polarizer P1 (as shown in FIG. 3). Furthermore, the display panel 10B includes a light-shielding layer LS and does not include the spacer S shown in FIG. 3. The top view shape of the light-shielding layer LS may be a closed shape. The closed shape may be rectangular, circular, or other polygons, which may not be limited here. The light-shielding layer LS may be made with light-absorbing material, such as a black matrix or overlapping dimming patterns of different colors, but is not limited thereto. The light-shielding layer LS is disposed between the liquid crystal layer LC and the second substrate SUB2 and has a first opening A1 overlapping the first liquid crystal region RL1 and a second opening A2 overlapping the second liquid crystal region RL2, with the dimming layer CF overlapping the second opening A2. In some embodiments, as shown in FIG. 4, the light-shielding layer LS may have multiple second openings A2, and the dimming layer CF may include multiple dimming patterns (such as red dimming patterns, green dimming patterns, and blue dimming patterns). The dimming patterns may respectively overlap the second openings A2, but are not limited thereto. The dimming patterns may include color filter patterns, color conversion patterns, or combinations thereof. In some embodiments, in a cross-sectional diagram as shown in FIG. 4, the width of the light-shielding layer LS between the first liquid crystal region RL1 and the second liquid crystal region RL2 may be greater than the width of the light-shielding layer LS between two adjacent dimming patterns in the second liquid crystal region RL2. In some embodiments, in a cross-sectional diagram as shown in FIG. 4, the width of the first opening A1 may be greater than the width of the second opening A2. By absorbing large-angle light beams emitted by the light-emitting units 121 through the light-shielding layer LS, image interference caused by the display panel 10 reflecting large-angle light beams from the light-emitting units 121 to the sensor 11 may be reduced. Moreover, the number of first electrodes E1 in the display panel 10B may be one, and the first electrode E1 may be at least disposed in the first liquid crystal region RL1. In some embodiments, as shown in FIG. 4, the first electrode E1 may further extend into the region between the first liquid crystal region RL1 and the second liquid crystal region RL2 covered by the light-shielding layer LS, but the disclosure is not limited thereto. In other embodiments, although not shown, the display panel 10B may be replaced with the display panel 10 in FIG. 2 or the display panel 10A in FIG. 3.

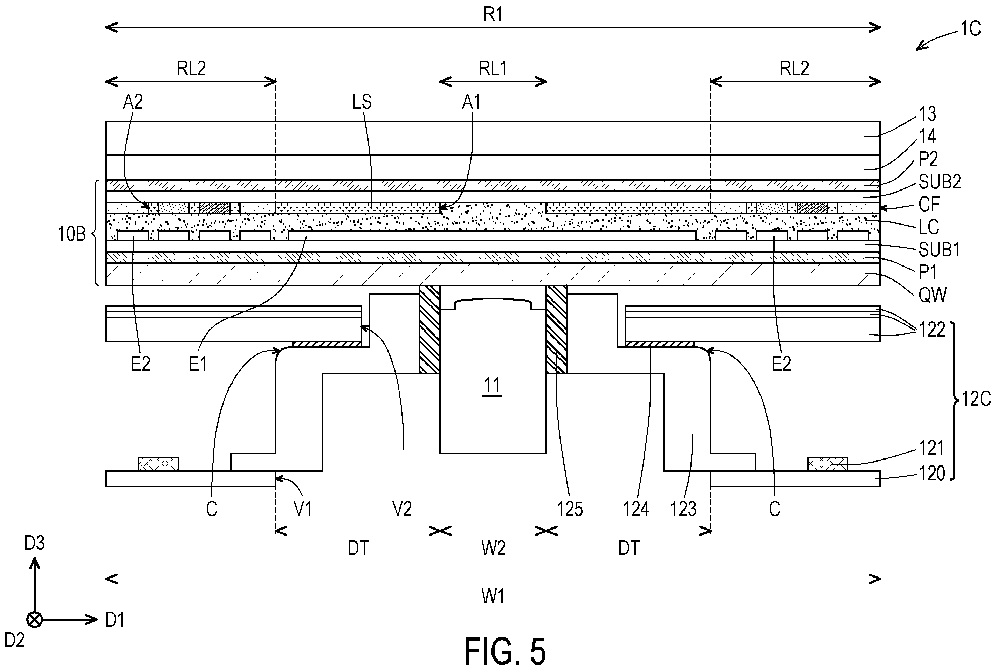

Referring to FIG. 5, the main differences between a display device 1C and the display device 1B in FIG. 4 are described as follows. In the display device 1C, a backlight module 12C further includes a buffer layer 125 (such as rubber, foam, a sleeve, a bonding layer, and/or other suitable elements). In some embodiments, as shown in FIG. 5, the buffer layer 125 may abut the surface of the display panel 10A facing the backlight module 12A, but is not limited thereto. In some embodiments, the buffer layer 125 may be made with a light-absorbing material to absorb stray light. Alternatively, the buffer layer 125 may be made with a transparent material, and a light-shielding layer (not shown, such as a light-absorbing layer or a reflective layer) may be formed on the sidewall of the buffer layer 125 to reduce light interference from the light-emitting unit 121 and/or improve light utilization. In other embodiments, although not shown, the display panel 10B in FIG. 5 may be replaced with the display panel 10 in FIG. 2 or the display panel 10A in FIG. 3.

In summary, in the embodiment of the disclosure, by disposing the sensor in an overlapping manner with the display region, the feasibility of narrow bezel design may be enhanced, realizing a narrow or even bezel-less design for the display device. Additionally, by independently controlling the first electrode in the first liquid crystal region corresponding to the sensor, the first liquid crystal region may be in the light-transmitting state, allowing the sensor to capture external images.

The above embodiments are used to describe the technical solution of the disclosure instead of limiting it. Although the disclosure has been described in detail with reference to each embodiment above, those having ordinary skill in the art should understand that the technical solution recited in each embodiment above may still be modified, or some or all of the technical features thereof may be equivalently replaced. These modifications or replacements do not make the essence of the corresponding technical solutions depart from the scope of the technical solution of each embodiment of the disclosure.

Although the embodiments and advantages of the embodiments of the disclosure have been disclosed as above, it should be understood that any person skilled in the art, without departing from the scope of the claims, may make changes, substitutions and modifications, and the features of the embodiments may be arbitrarily mixed and replaced to form other new embodiments. The protection scope of the invention is defined by the appended claims.

## Claims

1. A display device (1, 1A), having a display region (R1), wherein the display device (1, 1A) comprises:
a display panel (10, 10A), comprising:
a liquid crystal layer (LC), disposed corresponding to the display region (R1) and comprising a first liquid crystal region (RL1) and a second liquid crystal region (RL2) adjacent to the first liquid crystal region (RL1);
a first electrode (E1), used to control the first liquid crystal region (RL1); and
a second electrode (E2), used to control the second liquid crystal region (RL2), wherein the second electrode (E2) is electrically independent of the first electrode (E1); and
a sensor (11), used to sense an image information and disposed corresponding to the first liquid crystal region (RL1),
wherein the display panel (10, 10A) further comprises:
a first substrate (SUB1);
a second substrate (SUB2), disposed opposite to the first substrate (SUB1), wherein the liquid crystal layer (LC) is disposed between the first substrate (SUB1) and the second substrate (SUB2);
a spacer (S), disposed between the first substrate (SUB1) and the second substrate (SUB2) and separating the first liquid crystal region (RL1) from the second liquid crystal region (RL2);
a color filter layer or a color conversion layer or a combination thereof (CF), disposed between the liquid crystal layer (LC) and the second substrate (SUB2) and overlapping the second liquid crystal region (RL2);
a first polarizer (P1), disposed between the sensor (11) and the first substrate (SUB1);
a second polarizer (P2), disposed on the second substrate (SUB2), wherein the first polarizer (P1) and the second polarizer (P2) overlap the display region (R1), and an absorption axis of the first polarizer (P1) is perpendicular to an absorption axis of the second polarizer (P2);
wherein the display device is **characterized in that**
the display panel (10, 10A) further comprises:
a quarter-wave plate (QW), disposed between the first polarizer (P1) and the sensor (11) and at least partially overlapping the first liquid crystal region (RL1).

2. The display device (1, 1A) according to claim 1, wherein the display device (1, 1A) has a display mode and a non-display mode, and when the display device (1, 1A) is in any one of the display mode and the non-display mode, the first liquid crystal region (RL1) is in a light-transmitting state according to a first voltage.

3. The display device (1, 1A) according to claim 1, wherein in a first direction (D1), the quarter-wave plate (QW) has a first width (W1), and the sensor (11) has a second width (W2), the first width (W1) being greater than the second width (W2).

4. The display device (1A) according to any one of claims 1 to 3, further comprising:
a backlight module (12A), comprising:
a substrate (120), having a first through via (V1);
a plurality of light-emitting units (121), disposed on the substrate (120); and
at least one optical film (122), disposed between the plurality of light-emitting units (121) and the first polarizer (P1) and having a second through via (V2), wherein the first through via (V1) and the second through via (V2) overlap the sensor (11).

5. The display device (1A) according to claim 4, wherein the plurality of light-emitting units (121) overlap the second liquid crystal region (RL2) and overlap the first polarizer (P1) and the second polarizer (P2).

6. The display device (1A) according to claim 4 or 5, wherein the first through via (V1) is larger than the second through via (V2).

7. The display device (1A) according to any one of claims 4 to 6, wherein the backlight module (12A) further comprises:
a supporting element (123), disposed on the substrate (121) and used to maintain a distance between the at least one optical film (122) and the plurality of light-emitting units (121).

8. The display device (1A) according to claim 7, wherein the supporting element (123) is made with or covered with a highly-reflective material.

9. The display device (1A) according to claim 7 or 8, wherein an edge corner (C) of the supporting element (123) protruding toward the at least one optical film (122) is an arc edge.

10. The display device (1A) according to any one of claims 7 to 9, wherein the backlight module (12A) further comprises:
a bonding layer (124), wherein the at least one optical film (122) is fixed on a portion of the supporting element (123) through the bonding layer (124).

11. An image sensing method of the display device (1, 1A) according to any one of claims 1 to 10, wherein the image sensing method of the display device (1, 1A) comprises:
providing a first voltage to the first liquid crystal region (RL1) such that the first liquid crystal region (RL1) is in a light-transmitting state;
making the sensor (11) sense an image information;
in the non-display mode, providing a second voltage to the second liquid crystal region (RL2) such that the second liquid crystal region (RL2) is in a non-light-transmitting state; and
in the display mode, providing a third voltage to the second liquid crystal region (RL2) such that the second liquid crystal region (RL2) is in a light-transmitting state,
wherein the first voltage is different from the second voltage, and the second voltage is different from the third voltage.

## Patentansprüche

1. Anzeigevorrichtung (1, 1A) mit einem Anzeigebereich (R1), wobei die Anzeigevorrichtung (1, 1A) umfasst:
ein Anzeigepanel (10, 10A), umfassend:
eine Flüssigkristallschicht (LC), die entsprechend dem Anzeigebereich (R1) angeordnet ist und einen ersten Flüssigkristallbereich (RL1) und einen an den ersten Flüssigkristallbereich (RL1) angrenzenden zweiten Flüssigkristallbereich (RL2) umfasst;
eine erste Elektrode (E1), die zur Steuerung des ersten Flüssigkristallbereichs (RL1) verwendet wird; und
eine zweite Elektrode (E2), die zur Steuerung des zweiten Flüssigkristallbereichs (RL2) verwendet wird, wobei die zweite Elektrode (E2) elektrisch unabhängig von der ersten Elektrode (E1) ist; und
einen Sensor (11), der zur Erfassung von Bildinformationen verwendet wird und entsprechend dem ersten Flüssigkristallbereich (RL1) angeordnet ist,
wobei das Anzeigepanel (10, 10A) ferner umfasst:
ein erstes Substrat (SUB1);
ein zweites Substrat (SUB2), das gegenüberliegend zu dem ersten Substrat (SUB1) angeordnet ist, wobei die Flüssigkristallschicht (LC) zwischen dem ersten Substrat (SUB1) und dem zweiten Substrat (SUB2) angeordnet ist;
einen Abstandshalter (S), der zwischen dem ersten Substrat (SUB1) und dem zweiten Substrat (SUB2) angeordnet ist und den ersten Flüssigkristallbereich (RL1) von dem zweiten Flüssigkristallbereich (RL2) trennt;
eine Farbfilterschicht oder eine Farbkonversionsschicht oder eine Kombination davon (CF), angeordnet zwischen der Flüssigkristallschicht (LC) und dem zweiten Substrat (SUB2) und überlappend den zweiten Flüssigkristallbereich (RL2);
einen ersten Polarisator (P1), der zwischen dem Sensor (11) und dem ersten Substrat (SUB1) angeordnet ist;
einen zweiten Polarisator (P2), der auf dem zweiten Substrat (SUB2) angeordnet ist, wobei der erste Polarisator (P1) und der zweite Polarisator (P2) den Anzeigebereich (R1) überlappen und eine Absorptionsachse des ersten Polarisators (P1) senkrecht zu einer Absorptionsachse des zweiten Polarisators (P2) ist;
wobei die Anzeigevorrichtung **dadurch gekennzeichnet ist, dass** das Anzeigepanel (10, 10A) ferner umfasst:
eine Viertelwellenplatte (QW), die zwischen dem ersten Polarisator (P1) und dem Sensor (11) angeordnet ist und den ersten Flüssigkristallbereich (RL1) zumindest teilweise überlappt.

2. Anzeigevorrichtung (1, 1A) nach Anspruch 1, wobei die Anzeigevorrichtung (1, 1A) einen Anzeigemodus und einen Nicht-Anzeigemodus aufweist und, wenn die Anzeigevorrichtung (1, 1A) in einem von dem Anzeigemodus und dem Nicht-Anzeigemodus ist, der erste Flüssigkristallbereich (RL1) entsprechend einer ersten Spannung in einem lichtdurchlässigen Zustand ist.

3. Anzeigevorrichtung (1, 1A) nach Anspruch 1, wobei in einer ersten Richtung (D1) die Viertelwellenplatte (QW) eine erste Breite (W1) und der Sensor (11) eine zweite Breite (W2) aufweist, wobei die erste Breite (W1) größer als die zweite Breite (W2) ist.

4. Anzeigevorrichtung (1A) nach einem der Ansprüche 1 bis 3, ferner umfassend:
ein Hintergrundbeleuchtungsmodul (12A), umfassend:
ein Substrat (120) mit einer ersten Durchgangsöffnung (V1);
eine Vielzahl von lichtemittierenden Einheiten (121), die auf dem Substrat (120) angeordnet sind; und
mindestens eine optische Folie (122), die zwischen der Vielzahl von lichtemittierenden Einheiten (121) und dem ersten Polarisator (P1) angeordnet ist und eine zweite Durchgangsöffnung (V2) aufweist, wobei die erste Durchgangsöffnung (V1) und die zweite Durchgangsöffnung (V2) den Sensor (11) überlappen.

5. Anzeigevorrichtung (1A) nach Anspruch 4, wobei die Vielzahl von lichtemittierenden Einheiten (121) den zweiten Flüssigkristallbereich (RL2) überlappt und den ersten Polarisator (P1) und den zweiten Polarisator (P2) überlappt.

6. Anzeigevorrichtung (1A) nach Anspruch 4 oder 5, wobei die erste Durchgangsöffnung (V1) größer als die zweite Durchgangsöffnung (V2) ist.

7. Anzeigevorrichtung (1A) nach einem der Ansprüche 4 bis 6, wobei das Hintergrundbeleuchtungsmodul (12A) ferner umfasst:
ein Stützelement (123), das auf dem Substrat (121) angeordnet ist und verwendet wird, einen Abstand zwischen der mindestens einen optischen Folie (122) und der Vielzahl von lichtemittierenden Einheiten (121) aufrechtzuerhalten.

8. Anzeigevorrichtung (1A) nach Anspruch 7, wobei das Stützelement (123) aus einem hochreflektierenden Material hergestellt oder damit beschichtet ist.

9. Anzeigevorrichtung (1A) nach Anspruch 7 oder 8, wobei ein in Richtung der mindestens einen optischen Folie (122) vorstehende Kanteneckbereich (C) des Stützelements (123) eine Bogenkante ist.

10. Anzeigevorrichtung (1A) nach einem der Ansprüche 7 bis 9, wobei das Hintergrundbeleuchtungsmodul (12A) ferner umfasst:
eine Bondingschicht (124), wobei die mindestens eine optische Folie (122) über die Bondingschicht (124) an einem Abschnitt des Stützelements (123) befestigt ist.

11. Bilderfassungsverfahren der Anzeigevorrichtung (1, 1A) nach einem der Ansprüche 1 bis 10, wobei das Bilderfassungsverfahren der Anzeigevorrichtung (1, 1A) umfasst:
Bereitstellen einer ersten Spannung an den ersten Flüssigkristallbereich (RL1), so dass der erste Flüssigkristallbereich (RL1) in einem lichtdurchlässigen Zustand ist;
Veranlassen des Sensors (11), Bildinformationen zu erfassen;
in dem Nicht-Anzeigemodus, Bereitstellen einer zweiten Spannung an den zweiten Flüssigkristallbereich (RL2), so dass der zweite Flüssigkristallbereich (RL2) in einem lichtundurchlässigen Zustand ist; und
in dem Anzeigemodus, Bereitstellen einer dritten Spannung an den zweiten Flüssigkristallbereich (RL2), so dass der zweite Flüssigkristallbereich (RL2) in einem lichtdurchlässigen Zustand ist,
wobei sich die erste Spannung von der zweiten Spannung unterscheidet und sich die zweite Spannung von der dritten Spannung unterscheidet.

## Revendications

1. Dispositif d'affichage (1, 1A) comportant une zone d'affichage (R1), dans lequel le dispositif d'affichage (1, 1A) comprend :
un panneau d'affichage (10, 10A), comprenant :
une couche de cristaux liquides (LC), disposée en correspondance avec la zone d'affichage (R1) et comprenant une première zone de cristaux liquides (RL1) et une deuxième zone de cristaux liquides (RL2) adjacente à la première zone de cristaux liquides (RL1) ;
une première électrode (E1), utilisée pour commander la première zone de cristaux liquides (RL1) ; et
une deuxième électrode (E2), utilisée pour commander la deuxième zone de cristaux liquides (RL2), la deuxième électrode (E2) étant électriquement indépendante de la première électrode (E1) ; et
un capteur (11), utilisé pour détecter des informations d'image et disposé en correspondance avec la première zone de cristaux liquides (RL1),
le panneau d'affichage (10, 10A) comprenant en outre :
un premier substrat (SUB1) ;
un deuxième substrat (SUB2), disposé en face du premier substrat (SUB1), la couche de cristaux liquides (LC) étant disposée entre le premier substrat (SUB1) et le deuxième substrat (SUB2) ;
un espaceur (S), disposé entre le premier substrat (SUB1) et le deuxième substrat (SUB2) et séparant la première zone de cristaux liquides (RL1) de la deuxième zone de cristaux liquides (RL2) ;
une couche de filtre de couleur ou une couche de conversion de couleur, ou une combinaison de celles-ci (CF), disposée entre la couche de cristaux liquides (LC) et le deuxième substrat (SUB2) et recouvrant la deuxième zone de cristaux liquides (RL2) ;
un premier polariseur (P1), disposé entre le capteur (11) et le premier substrat (SUB1) ;
un deuxième polariseur (P2), disposé sur le deuxième substrat (SUB2), le premier polariseur (P1) et le deuxième polariseur (P2) recouvrant la zone d'affichage (R1), et l'axe d'absorption du premier polariseur (P1) étant perpendiculaire à l'axe d'absorption du deuxième polariseur (P2) ;
le dispositif d'affichage étant **caractérisé en ce que**
le panneau d'affichage (10, 10A) comprend en outre :
une lame quart d'onde (QW), disposée entre le premier polariseur (P1) et le capteur (11) et recouvrant au moins partiellement la première zone de cristaux liquides (RL1).

2. Dispositif d'affichage (1, 1A) selon la revendication 1, dans lequel le dispositif d'affichage (1, 1A) présente un mode d'affichage et un mode de non-affichage, et lorsque le dispositif d'affichage (1, 1A) se trouve dans l'un quelconque du mode d'affichage et du mode de non-affichage, la première zone de cristaux liquides (RL1) est dans un état de transmission de la lumière en fonction d'une première tension.

3. Dispositif d'affichage (1, 1A) selon la revendication 1, dans lequel, dans une première direction (D1), la lame quart d'onde (QW) présente une première largeur (W1), et le capteur (11) présente une deuxième largeur (W2), la première largeur (W1) étant supérieure à la deuxième largeur (W2).

4. Dispositif d'affichage (1A) selon l'une quelconque des revendications 1 à 3, comprenant en outre :
un module de rétroéclairage (12A), comprenant :
un substrat (120), comportant un premier trou de passage (V1) ;
une pluralité d'unités d'émission de lumière (121), disposées sur le substrat (120) ; et au moins un film optique (122), disposé entre la pluralité d'unités d'émission de lumière (121) et le premier polariseur (P1) et comportant un deuxième trou de passage (V2), dans lequel le premier trou de passage (V1) et le deuxième trou de passage (V2) recouvrent le capteur (11).

5. Dispositif d'affichage (1A) selon la revendication 4, dans lequel la pluralité d'unités d'émission de lumière (121) recouvre la deuxième zone de cristaux liquides (RL2) et recouvre le premier polariseur (P1) et le deuxième polariseur (P2).

6. Dispositif d'affichage (1A) selon la revendication 4 ou 5, dans lequel le premier trou de passage (V1) est plus grand que le deuxième trou de passage (V2).

7. Dispositif d'affichage (1A) selon l'une quelconque des revendications 4 à 6, dans lequel le module de rétroéclairage (12A) comprend en outre :
un élément de support (123), disposé sur le substrat (121) et servant à maintenir une distance entre le au moins un film optique (122) et la pluralité d'unités d'émission de lumière (121).

8. Dispositif d'affichage (1A) selon la revendication 7, dans lequel l'élément de support (123) est réalisé en un matériau hautement réfléchissant ou recouvert d'un tel matériau.

9. Dispositif d'affichage (1A) selon la revendication 7 ou 8, dans lequel un coin de bord (C) de l'élément de support (123) faisant saillie vers le au moins un film optique (122) est un bord en arc.

10. Dispositif d'affichage (1A) selon l'une quelconque des revendications 7 à 9, dans lequel le module de rétroéclairage (12A) comprend en outre :
une couche de liaison (124), dans laquelle le au moins un film optique (122) est fixé sur une partie de l'élément de support (123) par l'intermédiaire de la couche de liaison (124).

11. Procédé de détection d'image du dispositif d'affichage (1, 1A) selon l'une quelconque des revendications 1 à 10, dans lequel le procédé de détection d'image du dispositif d'affichage (1, 1A) comprend :
l'application d'une première tension à la première zone de cristaux liquides (RL1) de telle sorte que la première zone de cristaux liquides (RL1) se trouve dans un état de transmission de la lumière ;
la détection d'une information d'image par le capteur (11) ;
en mode non-affichage, appliquer une deuxième tension à la deuxième zone de cristaux liquides (RL2) de telle sorte que la deuxième zone de cristaux liquides (RL2) se trouve dans un état de non-transmission de la lumière ; et
en mode d'affichage, appliquer une troisième tension à la deuxième zone de cristaux liquides (RL2) de telle sorte que la deuxième zone de cristaux liquides (RL2) se trouve dans un état de transmission de la lumière,
la première tension étant différente de la deuxième tension, et la deuxième tension étant différente de la troisième tension.
